# DEMANDE DE BREVET EUROPEEN

(11) **EP 4 546 174 A1**
(43) Date de publication de la demande: **30.04.2025**
(21) Numéro de dépôt: 23306856.8
(22) Date de dépôt: 23.10.2023
(51) Int. Cl.: G06F 18/214, G06F 18/21

(54) **PROCEDE D'OBTENTION D'UN MODELE D'IDENTIFICATION, PROGRAMME D'ORDINATEUR ET PROCEDE D'IDENTIFICATION ASSOCIES**

(71) Demandeur: BULL SAS, 78340 Les Clayes-Sous-Bois (FR)
(72) Inventeur: BUSI, Jean-Daniel, 13127 VITROLLES (FR); BELAFDIL, Chakib, 84300 CAVAILLON (FR)
(74) Mandataire: IPAZ

(57) **Abrégé**

L'invention concerne un procédé (20) d'obtention d'un modèle d'identification (4) d'émetteur, comprenant :
- génération (22) de données d'émission simulées d'un émetteur à partir d'un modèle d'émission respectif ;
- entraînement (24) d'un premier modèle d'intelligence artificielle pour obtenir un premier modèle d'identification ;
- mise en oeuvre d'un algorithme d'apprentissage actif comprenant :
• détermination, au moyen du premier modèle d'identification, de données d'identification estimées à partir de données d'émission d'entrée ;
• en fonction des données d'identification estimées, envoi, à un opérateur, d'au moins une demande d'identification ;
• enrichissement du jeu de données d'entraînement en fonction de données d'identification reçues en réponse à chaque demande d'identification ;

- entraînement (28) d'un deuxième modèle d'intelligence artificielle, à partir du jeu de données d'entraînement enrichi, pour obtenir le modèle d'identification (4).

## Description

### Domaine technique

La présente invention concerne un procédé d'obtention d'un modèle d'identification d'au moins un émetteur.

L'invention concerne également un programme d'ordinateur pour la mise en oeuvre d'un tel procédé, et un procédé d'identification d'un émetteur.

L'invention s'applique au domaine de l'identification d'émetteurs.

### État de la technique

Il est connu d'avoir recours à des modèles d'intelligence artificielle pour identifier un émetteur (tel qu'un radar, un sonar, un émetteur télécom, etc.) à partir de données d'émission associées à un tel émetteur, par exemple à partir d'un signal reçu en provenance d'un tel émetteur.

Plus précisément, il est connu d'entraîner un modèle d'intelligence artificielle sur la base d'un jeu de données d'entraînement, dans lequel, pour chaque émetteur, des données d'identification correspondantes (telles qu'un modèle ou une classe) sont associés à des données d'émission dudit émetteur. Il en résulte un modèle d'intelligence artificielle entraîné, par la suite appelé « modèle d'identification ».

Il est également possible d'utiliser des modèles d'intelligence sur la base d'un jeu de données sans données d'identification associée ; c'est le cas des modèles d'apprentissage non supervisés qui permettent de regrouper les données similaires, par exemple sur la base d'un calcul de similarité entre les données décrites en base et celles fournies en entrée des traitements. Ces derniers sont toutefois moins performants que les modèles supervisés, notamment dans la mesure où aucun mécanisme d'apprentissage n'autorise leur adaptation au cours du temps.

Néanmoins, un tel procédé ne donne pas entière satisfaction.

En effet, pour aboutir à un modèle d'identification apte à réaliser une identification fiable des émetteurs, un tel procédé requiert une base de données d'entraînement qui soit exhaustive.

Par « identification d'un émetteur », il est entendu, au sens de la présente invention, la détermination de tout ou partie des données d'identification de l'émetteur.

Il en résulte la nécessité de disposer des données d'identification relatives à l'ensemble des émetteurs à identifier au moment de l'entraînement du modèle d'intelligence artificielle visant à produire le modèle d'identification.

Un but de la présente invention est de remédier à au moins un des inconvénients de l'état de la technique.

Un autre but de l'invention est de proposer un procédé d'entraînement qui soit simple, qui ne requiert pas de détenir l'intégralité des données d'identification d'émetteur pour l'obtention du modèle d'identification, et qui conduise à un modèle d'identification fiable.

### Exposé de l'invention

À cet effet, l'invention concerne un procédé d'entraînement du type précité, comprenant les étapes suivantes :
- pour au moins un émetteur prédéterminé, chacun associé à un modèle d'émission respectif, génération de données d'émission simulées à partir du modèle d'émission correspondant audit émetteur prédéterminé ;
- entraînement d'un premier modèle d'intelligence artificielle, à partir d'un jeu de données d'entraînement, pour obtenir un premier modèle d'identification, le jeu de données d'entraînement comportant, pour chaque émetteur prédéterminé, au moins un couple de données d'entraînement correspondant comprenant des données d'identification respectives associées à tout ou partie des données d'émission simulées générées pour ledit émetteur prédéterminé ;

- mise en oeuvre d'un algorithme d'apprentissage actif sur la base de données d'émission d'entrée à identifier, comprenant :
   - détermination, au moyen du premier modèle d'identification, de données d'identification estimées à partir des données d'émission d'entrée ;
   - en fonction des données d'identification estimées, envoi, à un opérateur, d'au moins une demande d'identification associée aux données d'émission d'entrée ;
   - enrichissement du jeu de données d'entraînement en fonction de données d'identification reçues en réponse à chaque demande d'identification ;
- entraînement d'un deuxième modèle d'intelligence artificielle, à partir du jeu de données d'entraînement enrichi, pour obtenir le modèle d'identification.

En effet, grâce à un tel procédé, l'expertise d'un opérateur humain vient pallier un éventuel entraînement insuffisant du modèle de détection, ce qui autorise la mise à jour de ce dernier, et donc l'amélioration de ses performances, et ce sans recourir à un jeu de données d'entraînement qui soit exhaustif.

En outre, grâce à un tel procédé, un jeu de données de taille optimale au regard d'un critère de performance prédéterminé est obtenu. En particulier, un tel critère de performance repose sur la non-évolution d'une métrique de performance sur une base de données de test prédéterminée. La métrique de performance choisie n'est pas limitante (par exemple, la métrique de performance est l'une parmi : un taux de bonne identification, un F-score, un rappel ou une précision).

De façon avantageuse, le procédé selon l'invention présente une ou plusieurs des caractéristiques suivantes, prises isolément ou selon toute combinaison techniquement possible :
le deuxième modèle d'intelligence artificielle est le premier modèle d'identification ;
l'entraînement du deuxième modèle d'intelligence artificielle est un entraînement sur la base au moins des données d'émission d'entrée pour lesquelles les données d'identification reçues correspondantes ont servi à l'enrichissement du jeu de données d'entraînement ;
pour au moins un émetteur prédéterminé, la génération de données d'émission simulées comporte la mise en oeuvre d'un modèle d'émission respectif ;
l'enrichissement du jeu de données d'entraînement comprend les phases :
   - création d'au moins un couple de données d'entraînement complémentaire à partir des données d'identification reçues et des données d'émission d'entrée ; et
   - ajout, au jeu de données d'entraînement, de chaque couple de données d'entraînement complémentaire créé.

Selon un autre aspect de l'invention, il est proposé un programme d'ordinateur comprenant des instructions exécutables qui, lorsqu'elles sont exécutées par ordinateur, mettent en oeuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un procédé d'identification comprenant la fourniture de données d'émission, reçues en provenance d'au moins un émetteur, en entrée du modèle d'identification obtenu par la mise en oeuvre du procédé d'obtention d'un modèle d'identification tel que défini ci-dessus.

### Brève description des figures

L'invention sera mieux comprise à la lecture de la description qui va suivre, donnée uniquement à titre d'exemple non limitatif et faite en se référant aux dessins annexés sur lesquels :
la figure 1 est une représentation schématique d'une chaîne de traitement de données selon l'invention ; et
la figure 2 est un ordinogramme d'un procédé d'obtention d'un modèle d'identification et d'un procédé d'identification mis en oeuvre par la chaîne de traitement de données de la figure 1.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

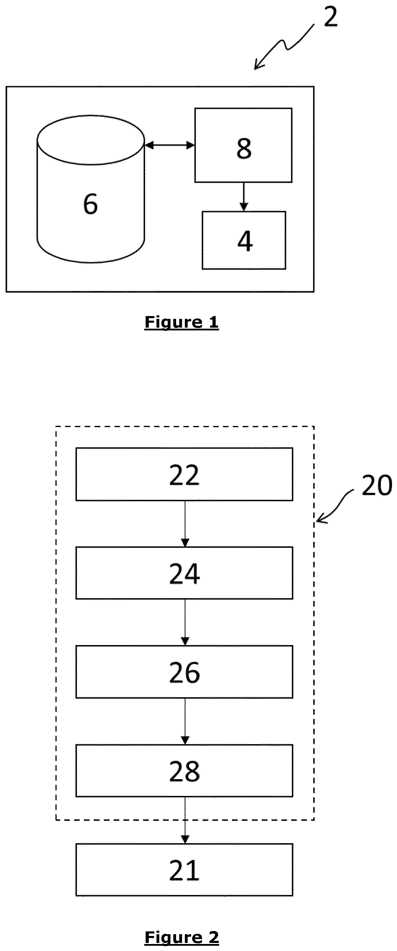

Une chaîne 2 de traitement de données (par la suite appelée « chaîne de traitement ») selon l'invention est illustrée par la figure 1.

La chaîne de traitement 2 est destinée à générer un modèle 4 d'identification d'au moins un émetteur, en particulier à partir de données d'émission reçues en provenance de l'émetteur. De telles données d'émission résultent notamment de la détection, par un détecteur, d'un signal émis par l'émetteur.

Par « émetteur », il est entendu, au sens de la présente invention, un objet apte à émettre un signal suivant un modèle d'émission, de préférence déterministe.

Par exemple, l'émetteur est un appareil électronique, tel qu'un radar, un sonar, un émetteur télécom, etc.

Selon un autre exemple, l'émetteur est un organe, par exemple un cerveau ou un coeur présentant un état de fonctionnement donné : par exemple, le modèle d'identification est apte à identifier l'émetteur comme étant un coeur en état de fibrillation.

De préférence, un émetteur, au sens de l'invention, est associé à un état donné.

A titre d'exemple, le modèle d'identification est apte à identifier, à partir de données d'émission représentatives de pulsations cardiaques, l'émetteur comme étant un coeur en état de fibrillation.

La chaîne de traitement 2 comporte une mémoire 6 et un calculateur 8 reliés entre eux.

### Mémoire 6

La mémoire 6 est configurée pour stocker, pour au moins un émetteur prédéterminé, le modèle d'émission respectif.

En outre, pour chaque émetteur prédéterminé, la mémoire 6 est configurée pour stocker des données d'émission simulées correspondantes. De telles données d'émission simulées seront décrites ultérieurement.

La mémoire 6 est également configurée pour stocker un jeu de données d'entraînement. Un tel jeu de données d'entraînement comporte, pour chaque émetteur prédéterminé, au moins un couple de données d'entraînement correspondant. Plus précisément, pour chaque émetteur prédéterminé, chaque couple de données d'entraînement correspondant comporte :
- des données d'identification dudit émetteur prédéterminé ; et
- tout ou partie des données d'émission simulées préalablement générées pour ledit émetteur prédéterminé.

La mémoire 6 est également configurée pour stocker un premier modèle d'intelligence artificielle (dit « premier modèle »).

En particulier, un tel premier modèle est choisi en fonction du type de données à traiter, et est susceptible d'être modifié en fonction des avancées techniques. Par exemple, selon les données utilisées, le premier modèle est susceptible d'être choisi comme étant un arbre décisionnel, un réseau de neurones, une forêt aléatoire, ou encore un modèle reposant sur la méthode XGBoost (de l'anglais « *extrême gradient boosting* »)*.*

La mémoire 6 est également configurée pour stocker des données d'émission d'entrée, relatives à un ou plusieurs émetteur(s) à identifier. Les données d'émission d'entrée forment donc des données réelles non labellisées.

### Calculateur 8

Le calculateur 8 est susceptible de se présenter sous une forme matérielle, telle qu'un ordinateur, un serveur, un processeur, une puce électronique, etc. Alternativement, ou de façon additionnelle, le calculateur 8 est susceptible de se présenter sous une forme logicielle telle qu'un programme d'ordinateur, ou une application, par exemple une application pour un appareil utilisateur de type tablette ou smartphone.

Le calculateur 8 est configuré pour mettre en oeuvre un procédé 20 d'obtention d'un modèle d'identification d'au moins un émetteur (par la suite, « procédé d'obtention »).

De préférence, le calculateur 8 est également configuré pour mettre en oeuvre un procédé d'identification 21 d'un émetteur à partir de données d'émission correspondantes.

### Procédé d'obtention 20

Le procédé d'obtention 20 est destiné à fournir un modèle d'identification apte à identifier au moins un détecteur à partir de données d'émission correspondantes.

Le procédé d'obtention 20 comprend une étape 22 de génération de données simulées (ou « étape de génération 22 »), une étape d'entraînement initial 24, une étape d'apprentissage actif 26 et une étape d'entraînement final 28.

### Etape de génération 22

Le calculateur 8 est configuré pour générer, pour au moins un émetteur prédéterminé, et au cours de l'étape de génération 22, des données d'émission simulées correspondantes.

De telles données d'émission simulées visent à reproduire des signaux qui auraient été émis par un tel émetteur et qui auraient ensuite été détectés par un capteur.

En particulier, pour au moins un émetteur prédéterminé, le calculateur 8 est configuré pour générer les données d'émission simulées correspondantes à partir du modèle d'émission respectif stocké dans la mémoire 6.

Un tel modèle d'émission comprend, notamment, une base descriptive comportant une description abstraite des émetteurs ou classes d'émetteurs. Par exemple, pour chaque émetteur, la base descriptive comporte une loi mathématique et/ou un type de forme d'onde (par exemple : un loi d'émission de radar à impulsion avec modulation de fréquence, un électrocardiogramme, un électroencéphalogramme, etc.).

De telles bases descriptives sont connues en soi, à l'image de bases Open Source telles que Jane's ou REDB (pour « *Radar Emitter DataBase* », ou base de données d'émetteur radar).

De préférence, le calculateur 8 est adapté pour générer les données d'émission simulées en prenant en compte, si possible, les caractéristiques du milieu de propagation et/ou de la chaîne de réception. En particulier, le calculateur 8 est configuré pour mettre en oeuvre au moins un modèle comportemental (compris dans le modèle d'émission) de l'émetteur et/ou de l'environnement et/ou d'un capteur pour générer lesdites données d'émission simulées. Généralement, le choix de chaque modèle comportemental dépend des informations à disposition et du contexte.

Les données d'émission simulées comprennent, par exemple, des échantillons I/Q et/ou des données synthétiques (typiquement temps d'arrivée, durée, fréquence, etc.).

Le calculateur 8 est également configuré pour écrire, dans la mémoire 6, les données d'émission simulées générées au cours de l'étape de génération 22. Le jeu de données d'entraînement est ainsi obtenu.

### Etape d'entraînement initial 24

Le calculateur 8 est également configuré pour, au cours de l'étape d'entraînement initial 24, entraîner le premier modèle à partir du jeu de données d'entraînement stocké dans la mémoire 6.

À l'issue de l'étape d'entraînement initial 24, un premier modèle d'identification est obtenu.

### Etape d'apprentissage actif 26

En outre, le calculateur 8 est configuré pour mettre en oeuvre, durant l'étape d'apprentissage actif 26, un algorithme d'apprentissage actif.

Plus précisément, le calculateur 8 est configuré pour mettre en oeuvre l'algorithme d'apprentissage actif sur la base des données d'émission d'entrée à identifier mentionnées précédemment.

Plus précisément encore, pour mettre en oeuvre l'algorithme d'apprentissage actif, le calculateur 8 est configuré pour déterminer, au moyen du premier modèle d'identification, des données d'identification estimées à partir des données d'émission d'entrée. Dans ce cas, les données d'identification estimées sont comprises dans des sorties du premier modèle d'identification lorsque les données d'émission d'entrée lui sont fournies en entrée.

En outre, lors de la mise en oeuvre de l'algorithme d'apprentissage actif, le calculateur 8 est configuré pour, en fonction des données d'identification estimées, envoyer à un opérateur au moins une demande d'identification associée aux données d'émission d'entrée.

De préférence, le calculateur 8 est configuré pour envoyer une demande d'identification soit de manière systématique, soit en cas de doute sur les données d'identification estimées.

Un exemple de critère pour quantifier un tel doute est l'entropie, définie comme la somme des termes pᵢlog(pᵢ), où pᵢ est la probabilité d'appartenance à la classe d'émetteurs « i ». En effet, l'entropie croît avec l'incertitude : l'entropie est maximale quand l'incertitude est maximale (c'est-à-dire quand les classes d'émetteurs sont équiprobables), et est minimale (nulle) quand la probabilité d'appartenance à une unique classe d'émetteurs vaut 1 (et qu'elle vaut donc zéro pour les autres classes d'émetteurs). Dans ce cas, le calculateur 8 est configuré pour envoyer la demande d'identification lorsque l'entropie dépasse un seuil prédéterminé.

Le calculateur 8 est également configuré, pour mettre en oeuvre l'algorithme d'apprentissage actif, de façon à enrichir le jeu de données d'entraînement stocké dans la mémoire 6 en fonction de données d'identification reçues en réponse à chaque demande d'identification.

De préférence, pour enrichir le jeu de données d'entraînement, le calculateur 8 est configuré pour d'abord créer au moins un couple de données d'entraînement complémentaire à partir des données d'identification reçues et des données d'émission d'entrée. En d'autres termes, chaque couple de données d'entraînement complémentaire comprend des données d'identification reçues associées aux données d'émission d'entrée correspondantes pour lesquelles une demande d'identification a été envoyée.

En outre, le calculateur est configuré pour ajouter (par écriture dans la mémoire 6) chaque couple de données d'entraînement complémentaire créé au jeu de données d'entraînement. Il en résulte un jeu de données d'entraînement enrichi.

De préférence encore, le calculateur 8 est configuré pour enrichir le jeu de données d'entraînement uniquement avec les données d'émission d'entrée qui n'y sont pas déjà présentes.

### Etape d'entraînement final 28

Le calculateur 8 est également configuré pour entraîner, durant l'étape d'entraînement final 28, un deuxième modèle d'intelligence artificielle (dit « deuxième modèle ») sur la base du jeu de données d'entraînement enrichi.

De préférence, le deuxième modèle est le premier modèle d'identification obtenu à l'issue de l'étape d'entraînement initial 24. Dans ce cas, le deuxième modèle est soumis à un nouvel entraînement sur la base au moins des données labélisées qui ont servi à enrichir le jeu de données d'entraînement durant l'étape d'apprentissage actif 26.

Alternativement, le deuxième modèle est un modèle d'intelligence artificielle vierge, c'est-à-dire qu'il n'a pas été préalablement entraîné. Dans ce cas, le deuxième modèle vierge est identique au premier modèle d'intelligence artificielle mis en oeuvre durant l'étape d'entraînement initial 24, ou est un modèle d'intelligence artificielle proche du premier modèle (tel qu'un modèle d'intelligence artificielle appartenant à la même famille que le premier modèle). En outre, dans ce cas, le deuxième modèle est entraîné sur la base du jeu de données d'entraînement enrichi obtenu à l'issue de l'étape d'apprentissage actif 26.

À l'issue de l'étape d'entraînement final 28, le modèle d'identification est obtenu.

### Identification 21

Comme indiqué précédemment, le calculateur 8 est également configuré pour mettre en oeuvre le procédé d'identification 21.

Plus précisément, le calculateur 8 est configuré pour, au cours de l'exécution du procédé d'identification 21, fournir en entrée du modèle d'identification obtenu, des données d'émission reçues.

En conséquence, des données d'identification estimées d'un émetteur sont fournies en sortie.

### Fonctionnement

Le fonctionnement de la chaîne de traitement 2 va maintenant être décrit en référence à la figure 2.

Au cours de l'étape de génération 22, le calculateur 8 génère, pour au moins un émetteur prédéterminé, des données d'émission simulées à partir du modèle d'émission respectif.

Puis, le calculateur 8 écrit, dans la mémoire 6, le jeu de données d'entraînement comportant, pour chaque émetteur prédéterminé, au moins un couple de données d'entraînement correspondant comprenant :
- les données d'identification respectives ; et
- tout ou partie des données d'émission simulées générées pour ledit émetteur prédéterminé.

Puis, au cours de l'étape d'entraînement initial 24, le calculateur 8 entraîne le premier modèle à partir du jeu de données d'entraînement stocké dans la mémoire 6, pour obtenir un premier modèle d'identification.

Puis, durant l'étape d'apprentissage actif 26, le calculateur 8 met en oeuvre un algorithme d'apprentissage actif, sur la base du premier modèle d'identification et de données d'émission d'entrée à identifier, de façon à obtenir un jeu de données d'entraînement enrichi.

Puis, durant l'étape d'entraînement final 28, le calculateur 8 entraîne un deuxième modèle à partir du jeu de données d'entraînement enrichi, de façon à obtenir le modèle d'identification.

De préférence, au cours de l'exécution du procédé d'identification 21, le calculateur 8 fournit, en entrée du modèle d'identification obtenu, des données d'émission reçues à identifier.

Bien entendu l'invention n'est pas limitée aux exemples qui viennent d'être décrits.

## Revendications

1. Procédé (20) d'obtention d'un modèle d'identification (4) d'au moins un émetteur, comprenant les étapes suivantes :
- pour au moins un émetteur prédéterminé, chacun associé à un modèle d'émission respectif, génération (22) de données d'émission simulées à partir du modèle d'émission correspondant audit émetteur prédéterminé ;
- entraînement (24) d'un premier modèle d'intelligence artificielle, à partir d'un jeu de données d'entraînement, pour obtenir un premier modèle d'identification, le jeu de données d'entraînement comportant, pour chaque émetteur prédéterminé, au moins un couple de données d'entraînement correspondant comprenant des données d'identification respectives associées à tout ou partie des données d'émission simulées générées pour ledit émetteur prédéterminé ;
- mise en oeuvre d'un algorithme d'apprentissage actif sur la base de données d'émission d'entrée à identifier, comprenant :
• détermination, au moyen du premier modèle d'identification, de données d'identification estimées à partir des données d'émission d'entrée ;
• en fonction des données d'identification estimées, envoi, à un opérateur, d'au moins une demande d'identification associée aux données d'émission d'entrée ;
• enrichissement du jeu de données d'entraînement en fonction de données d'identification reçues en réponse à chaque demande d'identification ;
- entraînement (28) d'un deuxième modèle d'intelligence artificielle, à partir du jeu de données d'entraînement enrichi, pour obtenir le modèle d'identification (4).

2. Procédé selon la revendication 1, dans lequel le deuxième modèle d'intelligence artificielle est le premier modèle d'identification.

3. Procédé selon la revendication 2, dans lequel l'entraînement (28) du deuxième modèle d'intelligence artificielle est un entraînement sur la base au moins des données d'émission d'entrée pour lesquelles les données d'identification reçues correspondantes ont servi à l'enrichissement du jeu de données d'entraînement.

4. Procédé selon l'une quelconque des revendications 1 à 3, dans lequel, pour au moins un émetteur prédéterminé, la génération (22) de données d'émission simulées comporte la mise en oeuvre d'un modèle d'émission respectif.

5. Procédé selon l'une quelconque des revendications 1 à 4, dans lequel l'enrichissement du jeu de données d'entraînement comprend les phases :
- création d'au moins un couple de données d'entraînement complémentaire à partir des données d'identification reçues et des données d'émission d'entrée ; et
- ajout, au jeu de données d'entraînement, de chaque couple de données d'entraînement complémentaire créé.

6. Programme d'ordinateur comprenant des instructions exécutables qui, lorsqu'elles sont exécutées par ordinateur, mettent en en oeuvre les étapes du procédé selon l'une quelconque des revendications 1 à 5.

7. Procédé d'identification (21) comprenant la fourniture de données d'émission, reçues en provenance d'au moins un émetteur, en entrée du modèle d'identification (4) obtenu par la mise en oeuvre du procédé (20) d'obtention d'un modèle d'identification selon l'une quelconque des revendications 1 à 5.
